(19) Europäisches Patentamt
European Patent Office
Office européen des brevets

(11) **EP 4 611 134 A1**

(12) **EUROPEAN PATENT APPLICATION**

(43) Date of publication:
**03.09.2025 Bulletin 2025/36**

(21) Application number: **25160231.4**

(22) Date of filing: **26.02.2025**

(51) International Patent Classification (IPC):
**H01M 50/107** *(2021.01)*    **H01M 50/179** *(2021.01)*
**H01M 50/342** *(2021.01)*

(52) Cooperative Patent Classification (CPC):
**H01M 50/3425; H01M 50/107; H01M 50/152;
H01M 50/179;** H01M 2200/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.02.2024 KR 20240030270
03.09.2024 KR 20240119341**

(71) Applicant: **SK On Co., Ltd.
Seoul 03161 (KR)**

(72) Inventors:
• **CHEONG, Hoemin
34124 Daejeon (KR)**
• **KWAK, Seung Ho
34124 Daejeon (KR)**

(74) Representative: **Prüfer & Partner mbB
Patentanwälte · Rechtsanwälte
Sohnckestraße 12
81479 München (DE)**

(54) **BATTERY CELL AND MANUFACTURING METHOD THEREOF**

(57)    The present disclosure relates to a battery cell including a case including an opening formed in one surface and an opposing surface facing the opening, and accommodating an electrode assembly through the opening, a cap plate coupled to the case to close the opening, and a vent portion having a shape of a groove on the opposing surface, wherein a ten-point average roughness of a surface of the vent portion is greater than a ten-point average roughness of an area adjacent to the vent portion.

FIG. 1

**Description**

BACKGROUND OF THE INVENTION

1. Field

The present disclosure relates to a secondary battery, and more specifically, to a battery cell and a method of manufacturing the battery cell.

2. Description of the Related Art

Secondary batteries convert electrical energy into chemical energy and store the chemical energy so that the secondary batteries can be reused multiple times through charging and discharging. Secondary batteries are widely used throughout the industry due to their economical and eco-friendly characteristics. In particular, lithium secondary batteries are widely used in the entire industry, including portable devices which require high-density energy.

The operating principle of lithium secondary batteries is the electrochemical oxidation-reduction reaction. In other words, electricity is generated by the movement of lithium ions and is charged in the opposite process. In the case of a lithium secondary battery, a phenomenon in which lithium ions from an anode escape and move to a cathode through an electrolyte and a separator is called discharge. In addition, the opposite process of the phenomenon is called charge.

As the processes of charging and discharging the secondary battery are repeated, a swelling phenomenon may occur in which internal pressure increases and a large amount of heat is generated. Since this swelling phenomenon may lead to explosions or fires, methods of controlling the internal pressure of the secondary batteries are required.

SUMMARY OF THE INVENTION

An object of the present disclosure is to provide a battery cell with improved stability by controlling internal pressure.

Another object of the present disclosure is to provide a battery cell in which internal pressure is controlled by changing the shape of a vent portion.

Another object of the present disclosure is to provide a battery cell in which a vent portion has a ring shape to surround an electrode terminal.

The present disclosure can be widely applied in the fields of electric vehicles, battery charging stations, and other green technologies such as photovoltaics and wind power using batteries. In addition, the present disclosure may be used in eco-friendly mobility, including electric vehicles and hybrid vehicles, to prevent climate change by suppressing air pollution and greenhouse fluid emissions.

A battery cell according to embodiments of the present disclosure may include a case including an opening formed in one surface and an opposing surface facing the opening, and accommodating an electrode assembly through the opening, a cap plate coupled to the case to close the opening, and a vent portion having a shape of a groove on the opposing surface, wherein a ten-point average roughness of a surface of the vent portion is greater than a ten-point average roughness of an area adjacent to the vent portion.

The vent portion may include a ring shape on a side toward an outside of the case among both sides of the opposing surface.

The battery cell may further include a first current collector plate disposed between the opposing surface and the electrode assembly in the case and electrically connected to the electrode assembly.

The battery cell may further include an electrode terminal electrically connected to the first current collector plate and exposed to the outside through the opposing surface.

The vent portion may be changed in shape based on internal pressure of the case.

At least a portion of the vent portion may be opened when the internal pressure of the case increases.

The groove may include a thickness less than or equal to one-sixth of a thickness of the opposing surface.

The area adjacent to the vent portion may include a structure in a form of a plurality of grains, and a structure of the area adjacent to the vent portion includes an equiaxed microstructure, or the plurality of grains are isotropic.

One of the plurality of grains may be at least partially cut.

The vent portion may include a re-solidification layer formed by heating and solidifying a portion by using a laser.

The ten-point average roughness of the surface of the vent portion may exceed 20.

A battery cell according to embodiments of the present disclosure may include an electrode assembly including a first electrode (an anode), a separator, and a second electrode (a cathode), a case including an opening formed in one surface and an opposing surface facing the opening, and accommodating an electrode assembly through the opening to be electrically connected to the second electrode, a cap plate coupled to the case to close the opening, and a vent portion having a shape of a groove in the opposing surface.

The battery cell may further include an electrode terminal electrically connected to the first electrode and exposed to an outside through the opposing surface.

The vent portion may include a ring shape surrounding the electrode terminal on a side facing the outside of the case among both sides of the opposing surface.

The battery cell may further include a first current collector plate electrically connected to the first electrode between the opposing surface and the first electrode in the case, and a second current collector plate electrically connected to the second electrode between the cap plate and the second electrode in the case.

A method of manufacturing a battery cell accommodating an electrode assembly including a first electrode, a separator, and a second electrode in a case including an opening formed in one surface of the battery cell and an opposing surface facing the opening according to embodiments of the present disclosure may include forming a vent portion by processing the opposing surface.

The forming the vent portion may include forming a start groove of the vent portion by a laser, and etching the opposing surface through the laser so that the vent portion forms a ring shape in the start groove.

The method may further include, after the forming of the vent portion: coupling a first current collector plate with the first electrode and a second current collector plate to the second electrode, and inserting the electrode assembly into the case through the opening so that the first current collector plate faces the opposing surface.

The method may further include coupling a cap plate to the case to close the opening after the inserting of the electrode assembly into the case.

A battery cell according to embodiments of the present disclosure may include a case including an opening formed in one surface and an opposing surface facing the opening, and accommodating the electrode assembly through the opening, a cap plate coupled to the case to close the opening, and a vent portion having a shape of a groove on the opposing surface, wherein a surface of the vent portion is rougher than a surface of an area adjacent to the vent portion.

BRIEF DESCRIPTION OF THE DRAWINGS

FIG. 1 is a diagram illustrating a battery cell according to an embodiment.
FIG. 2 is an exploded view of a battery cell according to an embodiment.
FIG. 3 is a diagram for explaining an electrode assembly according to an embodiment.
FIG. 4 is a diagram of an electrode assembly in a wound state according to an embodiment.
FIG. 5 is a cross-sectional view of a battery cell according to an embodiment.
FIG. 6 is a diagram for explaining an opposing surface of a battery cell according to an embodiment.
FIG. 7 is a view for explaining a cross section of a vent portion according to an embodiment.
FIG. 8 is a diagram illustrating a method of manufacturing a battery cell according to an embodiment.

DETAILED DESCRIPTION

Hereinafter, the present disclosure will be described in detail with reference to the accompanying drawings. This is, however, illustrative only and is not intended to limit the disclosure to the specific embodiments illustratively described.

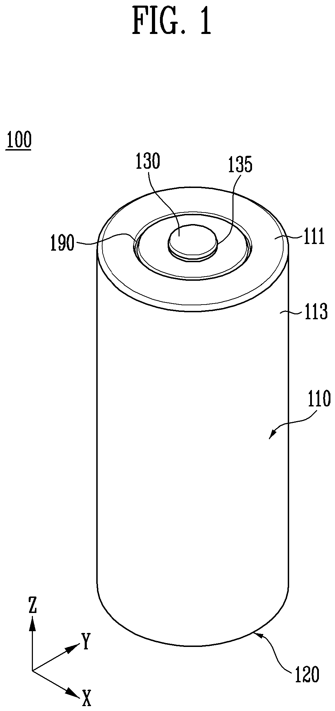

FIG. 1 is a diagram illustrating a battery cell 100 according to an embodiment.

Referring to FIG. 1, the battery cell 100 according to an embodiment may include a case 110, a cap plate 120, and a vent portion 190.

The battery cell 100 may be a secondary battery which can be charged and discharged multiple times.

For example, the secondary battery may be one of, but not limited to, a lithium cobalt battery, a lithium high nickel battery, a lithium iron phosphate battery, a lithium ion battery, a lithium polymer battery, a lithium sulfur battery, a nickel hydrogen battery, a nickel cadmium battery, a sodium battery, and an all-solid-state battery, and may also include other various types of secondary batteries.

The case 110 may include an opening 114 formed on one surface and an opposing surface 111 facing the opening 114. The case 110 may receive the electrode assembly 160 therein through the opening 114. The case 110 may accommodate a current collector plate 140 electrically connected to the electrode assembly 160 therein.

The opposing surface 111 is opened similarly to the opening 114, so that the case 110 may have a cylindrical shape with both sides opened. Alternatively, the opposing surface 111 may be closed differently from the opening 114, so that the case 110 may have a 'U' shape in which only one surface having the opening 114 is open.

For example, the case 110 may have the shape of a container which is partially open.

In an embodiment, the case 110 may include a material such as various metals such as iron and aluminum, alloys thereof, plastic, ceramic, or carbon.

In an embodiment, the case 110 may include the opposing surface 111 and a side surface portion 113.

The opposing surface 111 may extend from an upper end or a lower end of the side surface portion 113. The upper end and the lower end may be one of ends in a height direction (e.g., a Z-axis direction). For example, the opposing surface 111 may extend from the top of the side surface portion 113. In the embodiment, it is assumed that the opposing surface 111 is disposed at the top of the case 110, and the opening 114 is disposed at the bottom thereof.

At least a part of the opposing surface 111 may be formed as a flat surface with no changes in height in a horizontal direction (e.g., an X-axis direction or a Y-axis direction). The area excluding the vent portion 190 from the opposing surface 111 may be formed as a flat surface.

The opposing surface 111 may have a circular shape with respect to an XY plane. However, the present disclosure is not limited thereto, and the shape of the opposing surface 111 may be changed into an ellipse, a triangle, a rectangle, a polygon, or the like. The side surface portion 113 may extend in the height direction (e.g., the Z-axis direction) from the edge of the opposing surface 111. In an embodiment, the opposing surface 111 and the side surface portion 113 may be formed integrally with or separately from each other.

In an embodiment, a beading portion 115 may be formed on the side surface portion 113. The beading portion 115 may be a portion of the side surface portion 113 which is bent toward the inside surrounded by the side surface portion 113. In an embodiment, the opening 114 with one end opened may have the case 110.

The opening 114 may be formed on the opposite side of the opposing surface 111 in the height direction (e.g., the Z-axis direction).

For example, when the opposing surface 111 is formed at the top of the side surface portion 113, the opening 114 may be formed at the bottom of the side surface portion 113. The electrode assembly 160 and the current collector plate 140 may be inserted into the case 110 through the opening 114. Subsequently, the beading portion 115 may have one region of the side surface portion 113 adjacent to the opening 114.

The cap plate 120 may seal the case 110. The cap plate 120 may be coupled to the case 110 to close the opening 114.

In an embodiment, after the electrode assembly 160 and the current collector plate 140 are accommodated in the case 110, the cap plate 120 may be coupled to the case 110.

That is, the case 110 and the cap plate 120 may surround the outside of the electrode assembly 160 and the current collector plate 140. In an embodiment, the cap plate 120 and the case 110 coupled to each other may have a cylindrical shape. However, this is only one embodiment, and the shapes of the cap plate 120 and the case 110 coupled to each other may be changed into various shapes such as a square or a hexahedron.

In an embodiment, the cap plate 120 may be located on the opposite side of the opposing surface 111. For example, when the opposing surface 111 is formed at the top of the side surface portion 113, the cap plate 120 may be coupled to the bottom of the side surface portion 113.

In an embodiment, the opposing surface 111 may include the vent portion 190 having a shape of a groove.

The vent portion 190 may be formed on a side facing the outside of the case 110 among both sides of the opposing surface 111. The vent portion 190 may be recessed inwards from the opposing surface 111. The vent portion 190 may have a smaller thickness or a less height than an adjacent region.

In an embodiment, the vent portion 190 may have a ring or donut shape on the opposing surface 111.

The vent portion 190 may be connected along the circumference of the opposing surface 111 and have a continuous shape.

The vent portion 190 having a relatively small thickness or a relatively low height may be formed on the opposing surface 111. When the internal pressure of the case 110 increases, the shape of the vent portion 190 may be changed before the area adjacent to the vent portion 190.

In an embodiment, the vent portion 190 may be spaced apart from an electrode terminal 130 exposed to the outside on the opposing surface 111. The vent portion 190 has a circumference longer than the circumference of the electrode terminal 130, and may surround the electrode terminal 130.

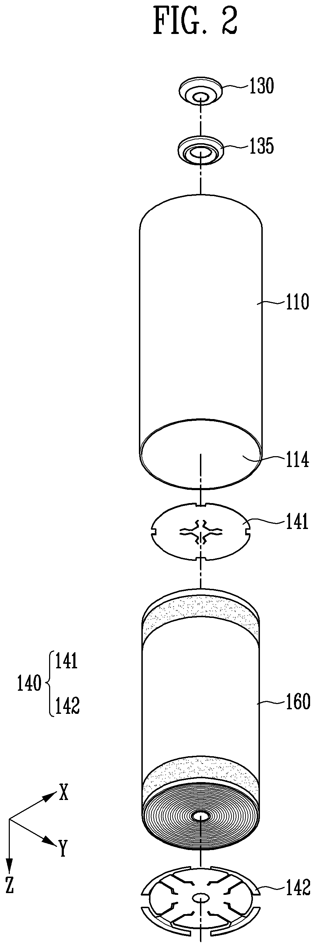

FIG. 2 is an exploded view of the battery cell 100 according to an embodiment.

Referring to FIG. 2, the battery cell 100 according to an embodiment may include the case 110, the cap plate 120, an electrode assembly 160, the current collector plate 140, the electrode terminal 130, and an insulating gasket 135.

FIG. 2 shows the battery cell 100 as viewed from the bottom, and the opposing surface 111 formed at the top of the battery cell 100 and including the vent portion 190 is not shown in FIG. 2. The opening 114 formed at the bottom of the battery cell 100 is shown.

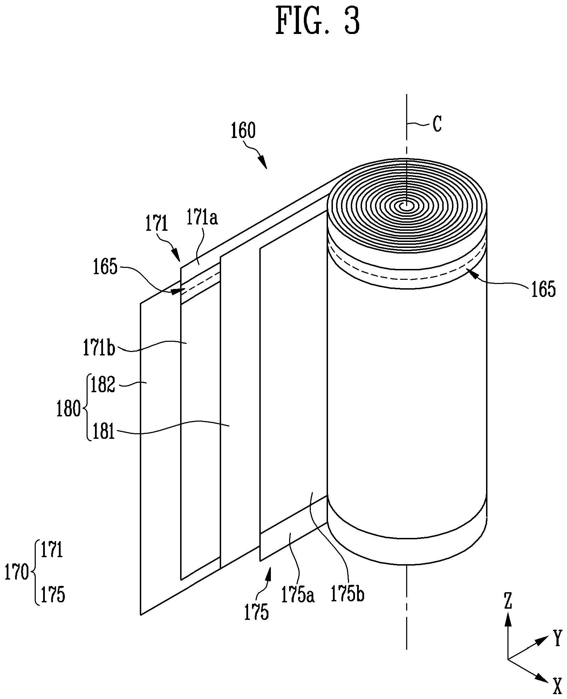

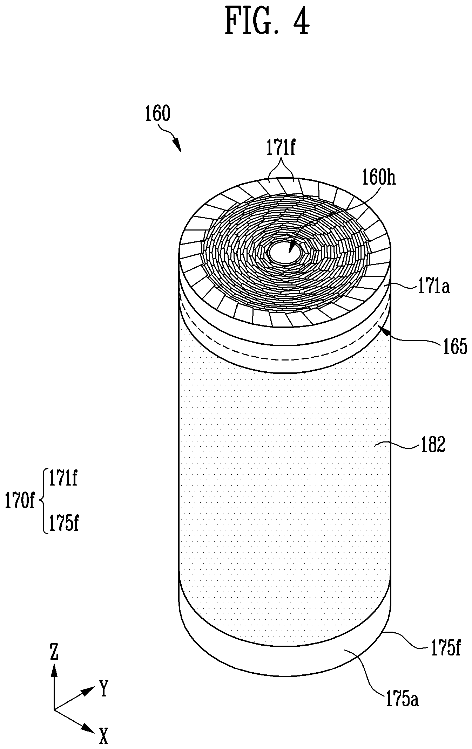

In an embodiment, the electrode assembly 160 may include a first electrode 171, a second electrode 175, and a separator 180, which will be described below in detail with reference to FIGS. 3 and 4.

In an embodiment, the current collector plate 140 may include at least one of a first current collector plate 141 and a second current collector plate 142. The first current collector plate 141 may be disposed between the opposing surface 111 of the case 110 and the electrode assembly 160. The second current collector plate 142 may be disposed between the cap plate 120 and the electrode assembly 160.

The current collector plate 140 may be electrically connected to the electrode of the electrode assembly 160. To this end, the current collector plate 140 may include a conductive material such as copper, gold, silver, or aluminum. The electrode may include the first electrode 171 and the second electrode 175.

In an embodiment, the first current collector plate 141 and the second current collector plate 142 may be electrically connected to different electrodes of the electrode assembly 160. For example, the first current collector plate 141 may be connected to the first electrode 171, and the second current collector plate 142 may be connected to the second electrode 175. In an embodiment, the first current collector plate 141 may be electrically connected to the electrode terminal 130. The second current collector plate 142 may be electrically connected to the case 110 and/or the cap plate 120.

The first current collector plate 141 may be disposed between the opposing surface 111 and the electrode assembly 160 in the case 110. The first current collector plate 141 may be electrically connected to the first electrode 171 of the electrode assembly 160.

The second current collector plate 142 may be disposed between the cap plate 120 and the electrode assembly 160 in the case 110. The second current collector plate 142 may be electrically connected to the second electrode 175 of the electrode assembly 160.

In an embodiment, the electrode terminal 130 may be located on the opposite side of the cap plate 120 in the height direction (e.g., the Z-axis direction). The electrode terminal 130 is electrically connected to the current collector plate 140 and may be exposed to the outside through the opposing surface 111. The electrode terminal 130 may be electrically connected to an external device. That is, current may flow to the external device through the electrode terminal 130.

In an embodiment, the electrode terminal 130 may be inserted into a through hole of the case 110.

In an embodiment, the electrode terminal 130 may be a rivet. In an embodiment, the through hole may have the opposing surface 111 of the case 110. For example, the through hole may be formed by penetrating the center of the opposing surface 111. The electrode terminal 130 may pass through the center of the opposing surface 111 and be exposed to the outside.

In an embodiment, the insulating gasket 135 may be disposed between the case 110 and the electrode terminal 130. For example, the insulating gasket 135 may be disposed between the opposing surface 111 of the case 110 and the electrode terminal 130. The insulating gasket 135 may include an insulating material. The insulating material may include materials with low electrical conductivity, such as polymers and ceramics.

FIG. 3 is a diagram illustrating the electrode assembly 160 according to an embodiment. FIG. 4 is a diagram of the electrode assembly 160 in a wound state according to an embodiment.

FIG. 3 is a partial exploded view of the wound electrode assembly 160, and FIG. 4 shows the electrode assembly 160 with a flag. Referring to FIGS. 3 and 4, the electrode assembly 160 according to an embodiment may include an electrode 170 and the separator 180.

The electrode 170 may include the first electrode 171 and the second electrode 175. The first electrode 171 and the second electrode 175 may have different polarities. For example, the first electrode 171 may be an anode and the second electrode 175 may be a cathode. For another example, the first electrode 171 may be a cathode and the second electrode 175 may be an anode.

The electrode 170 may be an electrode plate on which an active material is applied in one region. In an embodiment, the first electrode 171 may include a first non-coated portion 171a to which a first active material is not applied, and a first coated portion 171b to which the first active material is applied. The second electrode 175 may include a second non-coated portion 175a to which a second active material is not applied and a second coated portion 175b to which the second actively material is applied.

In an embodiment, the first non-coated portion 171a may be formed on the top of the first coated portion 171b. The second non-coated portion 175a may be formed on the bottom of the second coated portion 175b.

When the first electrode 171 is an anode, the first active material may be an anode active material. When the second electrode 175 is a cathode, the second active material may be a cathode active material. The anode active material may include at least one of a material such as a lithium transition metal oxide and a nickel-cobalt-manganese lithium oxide. The cathode active material may include at least one of a carbon material, lithium, a lithium metal compound, silicon, a silicon compound, tin, a tin compound, and the like. The above-described embodiment is merely an example, and types of the anode active material and the cathode active material may not be limited.

In an embodiment, the electrode 170 may further include an insulating coating portion 165 formed at the boundary of the non-coated portion and the coated portion. The insulating coating portion 165 may include an insulating material. The insulating coating portion 165 may improve mechanical rigidity with respect to a portion which is bent from the non-coated portion to form a flag 170f.

The separator 180 may include an inner separator 181 disposed between the first electrode 171 and the second electrode 175, and an outer separator 182 disposed on the outer side. The separator 180 may include an insulating material. The separator 180 may block contact between the first electrode 171 and the second electrode 175 and electrically separate the first electrode 171 and the second electrode 175 from each other.

The electrode assembly 160 may be wound. In an embodiment, the electrode 170 and the separator 180 stacked on top of each other may be wound along a central axis C. The central axis C may be the height direction (e.g., the Z-axis direction). For example, the outer separator 182, the first electrode 171, the inner separator 181, and the second electrode 175 stacked on top of each other may be wound along the central axis C.

The electrode 170 may include the flag 170f. In an embodiment, when a portion of the non-coated portion is bent, the flag 170f may be defined as a region from the bent portion to an end portion. In an embodiment, the non-coated portion may be bent at an angle in a range of 90 degrees or less relative to the XY plane. In an embodiment, the non-coated portion may be notched into a plurality of fragments. The plurality of fragments may be bent in the order from inner fragments to outer fragments.

The flag 170f may include a first flag 171f and a second flag 175f. For example, the first flag 171f may be formed by bending the first non-coated portion 171a of the first electrode 171 in an inward direction toward the central axis C. The second flag 175f may be formed by bending the second non-coated portion 175a of the second electrode 175 in an inward direction toward the central axis C.

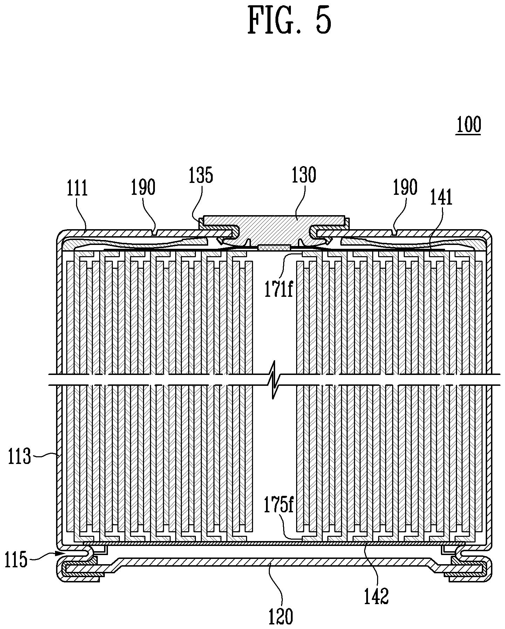

FIG. 5 is a cross-sectional view of the battery cell 100 according to an embodiment.

In FIG. 5, the opposing surface 111 is formed at the top of the battery cell, and the cap plate 120 closing the opening 114 may be disposed at the bottom thereof. For example, the beading portion 115 may be formed on the side surface portion adjacent to the cap plate 120 to be in contact with the second current collector plate 142.

The beading portion 115 may restrict movement of the electrode assembly 160 or the second current collector plate 142 in the case 110. The beading portion 115 may prevent the electrode assembly 160 or the second current collector plate 142 from being separated from the case 110. However, the present disclosure is not limited thereto, and the beading portion 115 may be omitted.

In an embodiment, an opposing surface 111 may include the vent portion 190 such that at least a portion may be opened at a predetermined pressure. The vent portion 190 may have a groove shape on the opposing surface 111 and have a smaller thickness than an adjacent region.

The vent portion 190 may be a notch formed in a downward direction from an upper surface of the opposing surface 111, that is, in a direction toward the inside. A cross-sectional shape of the vent portion 190 may have a notch shape. The vent portion 190 may have a ring shape on the upper surface of the opposing surface 111. When viewed from above with the opposing surface 111, the vent portion 190 may have a ring shape. However, the shape of the vent portion 190 is not limited thereto, and may have a rectangular shape or a polygonal shape.

The vent portion 190 may have a shape of a figure which is continuously connected on the opposing surface 111. For example, the vent portion 190 may have a form of a continuum in which straight lines or curved lines are connected to each other.

The vent portion 190 may be connected in a direction of 360 degrees with respect to the central axis C of the opposing surface 111.

The vent portion 190 may be spaced apart from the electrode terminal 130 which passes through the opposing surface 111 and is exposed to the outside. The vent portion 190 may be formed between the circumference of the terminal and the circumference of the opposing surface 111. The vent portion 190 may have a ring shape surrounding the terminal.

Referring to FIG. 5, the electrode assembly 160 may be wound along the central axis C.

The electrode assembly 160 may include a separator and an electrode. The electrode may include the flag 170f. In an embodiment, the battery cell 100 may further include an electrolyte. The electrolyte may be, for example, a medium which transfers ions or current between the anode and cathode of the electrode assembly 160.

The second current collector plate 142 may be electrically connected to the flag 170f of the electrode 170. For example, referring to FIGS. 3 and 4, the first current collector plate 141 may be electrically connected to the first flag 171f of the first electrode 171. In an embodiment, the first current collector plate 141 may be electrically connected to the electrode terminal 130. The second current collector plate 142 may be electrically connected to the second flag 175f of the second electrode 175.

In an embodiment, the insulating gasket 135 may be disposed between the opposing surface 111 of the case 110 and the electrode terminal 130. For example, the insulating gasket 135 may be disposed between the opposing surface 111 of the case 110 and the electrode terminal 130.

The insulating gasket 135 may block contact between the electrode terminal 130 and the case 110. The insulating gasket 135 may electrically separate the electrode terminal 130 and the case 110 from each other. That is, the electrode terminal 130 and the case 110 may have different polarities. For example, when the polarity of electrode terminal 130 is (+), the polarity of the case 110 may be (-).

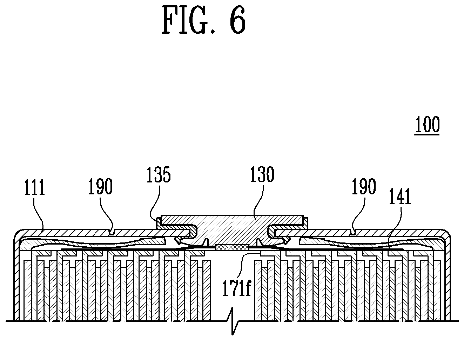

FIG. 6 is a diagram for explaining a portion of the opposing surface 111 of the battery cell 100 according to an embodiment.

FIG. 6 is a partial enlarged view of FIG. 5 for explaining the vent portion 190. The vent portion 190 is formed in a groove shape on the opposing surface 111 and may be formed by a laser.

The vent portion 190 may correspond to a region of the opposing surface 111 etched by a laser. With respect to a height along a direction from the opposing surface 111 toward the opening 114, the opposing surface 111 may have a thickness of 0.6 mm. The vent portion 190 may have a height of 0.1 mm, which is lower than the opposing surface 111.

In other words, the opposing surface 111 may have a thickness of 0.6 mm, and the vent portion 190 may have a height of 0.1 mm.

In an embodiment, the vent portion 190 may have a thickness equal to or less than 1/6 of the thickness of the opposing surface 111. The thickness of the vent portion 190 is 20% or less of the thickness of the opposing surface 111, and the vent portion 190 may be obtained by compressing the opposing surface 111 to approximately 80%. The vent portion 190 may be etched by a laser so that the thickness may be freely processed, compared to physical forging through a punch.

The shape of the vent portion 190 may be changed based on the internal pressure of the case 110. The vent portion 190 may have a less height or a less thickness than an area adjacent to the vent portion 190. When the internal pressure of the case 110 increases, the shape of the vent portion 190 may be changed before the area adjacent to the vent portion 190.

At least a part of the vent portion 190 may be opened when the internal pressure of the case 110 increases. The vent portion 190 may be partially broken when the internal pressure of the case 110 increases. The vent portion 190 has a ring shape on the opposing surface 111, and may be changed even when the internal pressure of the case 110 increases locally.

In an embodiment, the opposing surface 111 on which the vent portion 190 is formed may be formed integrally with the side surface portion.

The opposing surface 111 may extend from the side surface portion to the top. The opposing surface 111 may include the same material as the side surface portion. Accordingly, the opposing surface 111 may not be welded or physically coupled with the side surface portion.

The case 110 may be integrally formed except for the opening 114 formed on one surface. The case 110 may have a U-shape with one side opened.

The vent portion 190 may have a thickness smaller than the thickness of the side surface portion. When the internal pressure of the case 110 increases, it may be changed before the side surface portion.

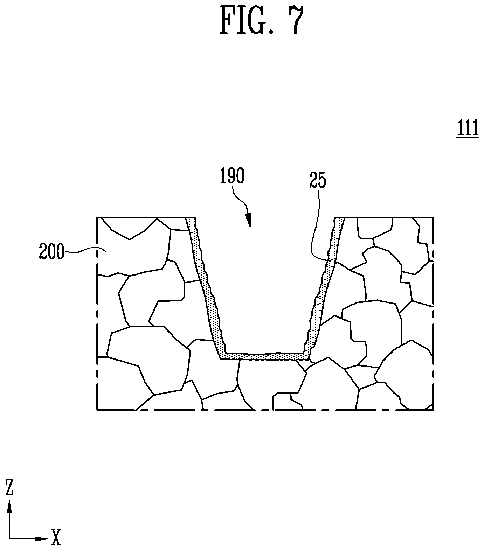

FIG. 7 is a view for explaining a cross section of the vent portion 190 according to an embodiment.

FIG. 7 is an enlarged view of the vent portion 190 according to an embodiment. The vent portion 190 may be recessed from the upper surface of the opposing surface 111 toward the inside of the case 110. The depth at which the vent portion 190 is recessed may be 80% or more of the thickness of the opposing surface 111. That is, referring to FIG. 7, the thickness of the opposing surface 111 on which the vent portion 190 is formed may be 20% or less of the thickness of the opposing surface 111 on which no vent portion 190 is provided.

FIG. 7 briefly shows the cross section of the opposing surface 111 which was photographed by an Electron Back Scatter Diffraction (EBSD) method. According to the EBSD method, by installing an EBSD analyzer on a scanning electron microscope, when accelerated electrons are injected into a specimen, the electrons are detected to analyze the orientation of the material. In this manner, a crystal structure of the opposing surface 111 may be analyzed.

The vent portion 190 may be formed by heating using a laser. The vent portion 190 may include a re-solidification layer 25 formed by solidifying a region of an overlapping portion after heating. The re-solidification layer 25 may discolor after a part of the opposing surface 111 is heated and solidified. In an embodiment, the solidified region may be distinguished from other regions by color. The re-solidification layer 25 may be formed outside the vent portion 190.

In an embodiment, the thickness of the re-solidification layer 25 in a direction from the inside to the outside of the opposing surface 111 may be 5 $\mu$m (micrometer) or more, and more specifically, 3 $\mu$m or more.

More specifically, the re-solidification layer 25 may be formed by melting and then re-solidifying the opposing surface 111 when a pulse laser having a pulse width of 1 ns (nano-second) or more is used on the opposing surface 111. The use of a pulse laser having a pulse width of less than 1 ns may not result in the formation of the re-solidification layer 25.

The re-solidification layer 25 may contain vacancy defects. More specifically, the crystal structure of the re-solidification layer 25 may include vacancy defects. The vacancy defects are a form of point defects in the crystal structure, and may be formed depending on the external environment such as heat and pressure. The vacancy defects may occur when atoms is absent from a lattice site, leaving holes or empty spaces in a crystal lattice.

As a result, some region of the battery cell 100 of the present disclosure may be heated and cooled to form the re-solidification layer 25, and the re-solidification layer 25 may include vacancy defects.

In an embodiment, the opposing surface 111 may include vacancy defects. The number of vacancy defects may be measured in a unit volume of the material. The number of vacancy defects may be calculated by Equation 1 below when the number may increase exponentially with the increase in temperature.

Equation 1

$$Nv = N\exp(-Qv/kT)$$

Here, Nv is the number of vacancy defects, N is the number of potential defect sites, Qv is the activation energy, T is the temperature (Kalvin scale), and k is the Boltzmann's constant.

In addition, the structure of the area adjacent to the vent portion 190 may have a form of a plurality of grains 200. The plurality of grains 200 may be checked by observing the opposing surface 111 with a scanning electron microscope (SEM).

The structure of the area adjacent to the vent portion 190 may include an equiaxed microstructure. That is, the plurality of grains 200 have no orientations and may have similar lengths toward the three axes. The plurality of grains 200 may have isotropy since the opposing surface 111 was heated and the grains 200 grew next to each other toward the three axes.

At least a part of one of the plurality of grains 200 may be cut. The vent portion 190 is formed by etching the opposing surface 111 by a laser. That is, the vent portion 190 may be formed by etching the opposing surface 111 by the laser to reduce thermal damage to the opposing surface 111.

The standard deviation of the size of the plurality of grains 200 may be 20 or less. That is, the plurality of grains 200 included in the overlapping portion may have a uniform size.

That is, the grains 200 were not subjected to external pressure after being heated and grown. The laser etching may be performed to cut the grains 200 irradiated by the laser to form the vent portion 190, and the size of the grains 200 located in the opposing surface 111 may not be changed.

The ten-point average roughness (Rz) of the surface of the vent portion 190 may be higher than the ten-point average roughness (Rz) in the area adjacent to the vent portion 190. The surface roughness may be classified according to an analysis method for a roughness curve, and may include the maximum height roughness (Rmax, Ry), the centerline average roughness (Ra), and the ten-point average roughness (Rz).

The maximum height roughness (Rmax, Ry) is the distance expressed in $\mu$m between the two straight lines when parallel lines are drawn on the upper and lower parts of the center line of the surface roughness curve. The maximum height roughness (Rmax, Ry) may refer to the difference in height, expressed in $\mu$m, between the highest point and the deepest valley in a reference length of the surface roughness curve. The maximum height roughness (Rmax, Ry) may be defined as an average value of the maximum heights for each reference length in an evaluation length.

In the centerline average roughness (Ra), a line drawn to satisfy S1=S2 when the sum of the areas above the centerline of the surface roughness curve is S1, and the sum of the areas below the centerline is S2 serves as the center line. The centerline average roughness (Ra) may represent the arithmetic mean of deviations with respect to the measurement length.

The ten-point average roughness (Rz) may refer to the distance between the two straight lines when the third peak at the highest point and the third valley at the lowest point are drawn parallel to the center line in the cross-sectional curve within the reference length (cut-off) of the collection part.

Alternatively, the ten-point average roughness (Rz) may be calculated through the average height of the five highest peaks and the average depth of the five deepest valleys in a cross-sectional curve which represents the height of the surface. The ten-point average roughness (Rz) may be relative to the height measured in the longitudinal magnification direction in the roughness curve. The ten-point average roughness (Rz) may be the sum of the average value of the absolute values from the highest position to the fifth one and the average value of the absolute values from the lowest position to the fifth one in the roughness curve. The ten-point average roughness (Rz) may be expressed in micrometers ($\mu$m).

The ten-point average roughness (Rz) is a numerical value of the surface roughness. By a known method of measuring roughness, the roughness of the surface of the vent portion 190 and the surface of the area adjacent to the vent portion 190 may be measured.

More specifically, roughness may be measured via non-contact profilometry, contact profilometry, optical interferometry, or atomic microscopy. In FIG. 7, the re-solidification layer 25 may be formed on the surface of the vent portion 190, and a relatively horizontal surface may be formed between inclined surfaces. The ten-point average roughness (Rz) may measure the roughness of a horizontal surface on the surface of the vent portion 190.

The vent portion 190 is limited in width, so the roughness may be measured through optical interferometry using a microscope or the like. The microscope may measure a random position of the vent portion 190, and the magnification may be set to 12x to 200x. The microscope may measure a length of 2 to 3 mm at the vent portion 190. The ten-point average roughness (Rz) of the surface of the vent portion 190 may be measured along the longitudinal direction of the vent portion 190 from an image obtained through the microscope. The ten-point average roughness (Rz) of the measured surface of the vent portion 190 may be greater than the surface of an area adjacent to the vent portion 190. That is, the surface of the vent portion 190 may be rougher than the surface of the area adjacent to the vent portion 190.

This is because the vent portion 190 is formed by the laser. When the vent portion 190 is formed by a pressing method other than laser, the pressed surface may be flat. However, in the present disclosure, the surface of the vent portion 190 may be roughened by forming the vent portion 190 by the laser. More specifically, the ten-point average roughness (Rz) of the surface of the vent portion 190 may exceed 20.

In the present disclosure, by forming the vent portion 190 by the laser, the vent portion 190 may be processed without any physical contact between the laser and the opposing surface 111.

When the vent portion 190 is formed by the pressing method, a die may be inserted into the case 110, and press may then be performed through a punch from the outside of the case 110. The punch may come into physical contact with the outside of the case 110, causing damage to the case 110 such as scratches and plating layers. In addition, physical deformation such as foreign substances or crushing may occur due to the press.

In the present disclosure, the vent portion 190 is formed by the laser, so that contamination by contact and damage to the case 110 may be prevented.

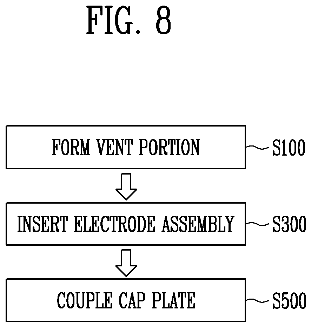

FIG. 8 is a diagram illustrating a method of manufacturing a battery cell according to an embodiment.

The electrode assembly 160 may include the first electrode 171, a separator, and a second electrode. The case 110 of the battery cell 100 may include the opening 114 formed on one surface and the opposing surface 111 facing the opening 114. The electrode assembly 160 may be accommodated in the case 110 through the opening 114 of the battery cell 100.

The method of manufacturing the battery cell may include processing the opposing surface 111 to form the vent portion 190 at step S100. A process of manufacturing the case 110 may be performed before forming the vent portion 190.

Step S100 of forming the vent portion 190 may include forming a start groove of the vent portion 190 by a laser (not shown) and etching the opposing surface 111 by the laser so that the vent portion 190 may form a ring shape in the start groove (not shown).

In the process of forming the start groove of the vent portion 190, a portion of the vent portion 1900 may be etched by the laser to form the start groove. The start groove may correspond to a starting point for forming the vent portion 190 in a ring shape. The point at which the laser first starts etching on the opposing surface 111 may correspond to the start groove.

In the process of etching the opposing surface 111, the opposing surface 111 may be continuously etched by the laser so that the vent portion 190 may form the ring shape in the start groove. Although the vent portion 190 forms the ring shape, the present disclosure is not limited thereto, and the vent portion 190 may have a polygonal shape having a continuous shape.

After the process of forming the vent portion 190 at step S100, the battery cell manufacturing method according to the present disclosure may include inserting the electrode assembly 160 into the case 110 at step S300. In addition, according to the method of manufacturing the battery cell according to the present disclosure, before the process of inserting the electrode assembly 160 at step S300, coupling the first current collector plate 141 to the first electrode 171 and coupling the second current collector plate 142 to the second electrode (not shown) may be performed.

In the process of coupling the current collector 140 to the electrode, the electrode assembly 160 and the current collector 140 may be coupled to each other. The first electrode 171 and the first current collector plate 141 may be coupled to each other, and the second electrode and the second current collector plate 142 may be coupled to each other, whereby the electrode and the current collector plate 140 may be electrically connected to each other.

Subsequently, at step S300 of inserting the electrode assembly 160 into the case 110, the electrode assembly 160 may be inserted into the case 110 through the opening 114 so that the first current collector plate 141 may face the opposing surface 111. The first current collector plate 141 may be inserted into the case 110 before the second current collector plate 142. Subsequently, 4 the electrode terminal 130 penetrating the opposing surface 111 may be electrically connected to the first current collector plate 141.

After step S300 of inserting the electrode assembly 160 into the case 110, the method of manufacturing the battery cell according to the present disclosure may further include coupling the cap plate 120 to the case 110 to close the opening 114 at step S500.

By coupling the case 110 and the cap plate 120 to each other, the inside of the case 110 may be disconnected from the outside.

According to an embodiment of the present disclosure, internal pressure may be controlled to improve stability.

According to another embodiment of the present disclosure, the internal pressure may be controlled by changing the shape of the vent portion.

According to another embodiment of the present disclosure, the vent portion is formed in a ring shape which surrounds an electrode terminal, and does not generate interference and form constraints during welding of the electrode terminal.

Aspect 1: A battery cell (100) comprising:

a case (110) including an opening (114) formed in one surface and an opposing surface (111) facing the opening (114), and accommodating an electrode assembly (160) through the opening (114);
a cap plate (120)coupled to the case (110) to close the opening (114); and
a vent portion (190) having a shape of a groove on the opposing surface (111),
wherein a ten-point average roughness of a surface of the vent portion (190) is greater than a ten-point average roughness of an area adjacent to the vent portion (190).

Aspect 2: The battery cell (100) according to aspect 1, wherein the vent portion (190) has a ring shape on a side toward an outside of the case (110) among both sides of the opposing surface (111).

Aspect 3: The battery cell (100) according to aspect 1 or 2, further comprising a first current collector plate (141) disposed between the opposing surface (111) and the electrode assembly (160) in the case (110) and electrically connected to the electrode assembly (160).

Aspect 4: The battery cell (100) according to aspect 3, further comprising an electrode terminal (130) electrically connected to the first current collector plate (141) and exposed to the outside through the opposing surface (111).

Aspect 5: The battery cell (100) according to any one of the preceding aspects, wherein the vent portion (190) is changed in shape based on internal pressure of the case (110).

Aspect 6: The battery cell (100) according to aspect 5, wherein at least a portion of the vent portion (190) is opened when the internal pressure of the case (110) increases.

Aspect 7: The battery cell (100) according to any one of the preceding aspects, wherein the groove has a thickness less than or equal to one-sixth of a thickness of the opposing surface (111).

Aspect 8: . The battery cell (100) according to any one of the preceding aspects, wherein the area adjacent to the vent portion (190) has a structure in a form of a plurality of grains, and
a structure of the area adjacent to the vent portion (190) includes an equiaxed microstructure, or the plurality of grains are isotropic.

Aspect 9: The battery cell (100) according to aspect 8, wherein one of the plurality of grains is at least partially cut.

Aspect 10: The battery cell (100) according to any one of the preceding aspects, wherein the vent portion (190) comprises a re-solidification layer formed by heating and solidifying a portion by using a laser.

Aspect 11: The battery cell (100) according to aspect 10, wherein the ten-point average roughness of the surface of the vent portion (190) exceeds 20.

Aspect 12: A method of manufacturing a battery cell (100) accommodating an electrode assembly (160) including a first electrode (171), a separator (180), and a second electrode (175) in a case (110) including an opening (114) formed in one surface of the battery cell (100) and an opposing surface (111) facing the opening (114), the method comprising:
forming a vent portion (190) by processing the opposing surface (111).

Aspect 13: The method according to aspect 12, wherein the forming the vent portion (190) comprises: forming a start groove of the vent portion (190) by a laser; and
etching the opposing surface (111) through the laser so that the vent portion (190) forms a ring shape in the start groove.

Aspect 14: The method according to aspect 12 or 13, further comprising, after the forming of the vent portion (190):

coupling a first current collector plate (141) with the first electrode (171) and a second current collector plate (142) to the second electrode (175); and
inserting the electrode assembly (160) into the case (110) through the opening (114) so that the first current collector plate (141) faces the opposing surface (111).

Aspect 15: The method according to aspect 14, further comprising coupling a cap plate (120) to the case (110) to close the opening (114) after the inserting of the electrode assembly (160) into the case (110).

The present disclosure may be modified and implemented in various forms, and its scope is not limited to the above-described embodiments. The content described above is merely an example of applying the principles of the present disclosure, and other features may be further included without departing from the scope of embodiments according to the present disclosure.

**Claims**

1. A battery cell (100) comprising:

   a case (110) including an opening (114) formed in one surface and an opposing surface (111) facing the opening, and accommodating an electrode assembly (160) through the opening;
   a cap plate (120) coupled to the case to close the opening; and
   a vent portion (190) having a shape of a groove on the opposing surface,
   wherein a ten-point average roughness of a surface of the vent portion is greater than a ten-point average roughness of an area adjacent to the vent portion.

2. The battery cell according to claim 1, wherein the vent portion has a ring shape on a side toward an outside of the case among both sides of the opposing surface.

3. The battery cell according to claim 1 or 2, further comprising a first current collector plate (141) disposed between the opposing surface and the electrode assembly in the case and electrically connected to the electrode assembly.

4. The battery cell according to claim 3, further comprising an electrode terminal (130) electrically connected to the first current collector plate and exposed to the outside through the opposing surface.

5. The battery cell according to any one of the preceding claims, wherein the vent portion is changed in shape based on internal pressure of the case.

6. The battery cell according to claim 5, wherein at least a portion of the vent portion is opened when the internal pressure of the case increases.

7. The battery cell according to any one of the preceding claims, wherein the groove has a thickness less than or equal to one-sixth of a thickness of the opposing surface.

8.  The battery cell according to any one of the preceding claims, wherein the area adjacent to the vent portion has a structure in a form of a plurality of grains, and a structure of the area adjacent to the vent portion includes an equiaxed microstructure, or the plurality of grains are isotropic.

9.  The battery cell according to claim 8, wherein one of the plurality of grains is at least partially cut.

10. The battery cell according to any one of the preceding claims, wherein the vent portion comprises a resolidification layer formed by heating and solidifying a portion by using a laser.

11. The battery cell according to claim 10, wherein the ten-point average roughness of the surface of the vent portion exceeds 20.

12. A method of manufacturing a battery cell (100) accommodating an electrode assembly (160) including a first electrode (171), a separator (180), and a second electrode (175) in a case (110) including an opening (114) formed in one surface of the battery cell and an opposing surface (111) facing the opening, the method comprising:
    forming a vent portion (190) by processing the opposing surface.

13. The method according to claim 12, wherein the forming the vent portion comprises:

    forming a start groove of the vent portion by a laser; and
    etching the opposing surface through the laser so that the vent portion forms a ring shape in the start groove.

14. The method according to claim 12 or 13, further comprising, after the forming of the vent portion:

    coupling a first current collector plate with the first electrode and a second current collector plate (142) to the second electrode; and
    inserting the electrode assembly into the case through the opening so that the first current collector plate faces the opposing surface.

15. The method according to claim 14, further comprising coupling a cap plate (120) to the case to close the opening after the inserting of the electrode assembly into the case.

# FIG. 1

# FIG. 2

# FIG. 3

# FIG. 4

# FIG. 5

# FIG. 7

# FIG. 8

| | |
|---|---|
| FORM VENT PORTION | ~S100 |

⇩

| | |
|---|---|
| INSERT ELECTRODE ASSEMBLY | ~S300 |

⇩

| | |
|---|---|
| COUPLE CAP PLATE | ~S500 |

| | Europäisches Patentamt European Patent Office Office européen des brevets | **EUROPEAN SEARCH REPORT** | Application Number EP 25 16 0231 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/411808 A1 (LI YONGJUN [CN] ET AL) 21 December 2023 (2023-12-21) * paragraphs [0063], [0064]; figures 4,5 * ----- | 1-15 | INV. H01M50/107 H01M50/179 H01M50/342 |
| X | CN 114 566 743 A (CHANGZHOU MICROCOSM ELECTRONIC SCIENCE AND TECH LIMITED COMPANY) 31 May 2022 (2022-05-31) * section: detailed ways; figures 5,6 * ----- | 1-15 | |

**TECHNICAL FIELDS SEARCHED (IPC)**

H01M

The present search report has been drawn up for all claims

| Place of search | Date of completion of the search | Examiner |
|---|---|---|
| Munich | 15 July 2025 | Spingler, Franz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...................................................................................
& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 25 16 0231

This annex lists the patent family members relating to the patent documents cited in the above-mentioned European search report.
The members are as contained in the European Patent Office EDP file on
The European Patent Office is in no way liable for these particulars which are merely given for the purpose of information.

15-07-2025

| Patent document cited in search report | Publication date | Patent family member(s) | Publication date |
|---|---|---|---|
| US 2023411808 A1 | 21-12-2023 | CN 115051084 A<br>CN 115986335 A<br>DE 102023115693 A1<br>US 2023411808 A1 | 13-09-2022<br>18-04-2023<br>21-12-2023<br>21-12-2023 |
| CN 114566743 A | 31-05-2022 | NONE | |

For more details about this annex : see Official Journal of the European Patent Office, No. 12/82

EPO FORM P0459